# EUROPÄISCHE PATENTSCHRIFT

(11) **EP 2 072 375 B1**
(45) Veröffentlichungstag und Bekanntmachung des Hinweises auf die Patenterteilung: **09.03.2011**
(21) Anmeldenummer: 08450197.2
(22) Anmeldetag: 17.12.2008
(51) Int. Cl.: B62D 13/04

(54) **Zwangslenkungssystem**
Forced steering system
Système de direction forcée

(30) Priorität: 21.12.2007 AT 21082007
(43) Veröffentlichungstag der Anmeldung: 24.06.2009
(73) Patentinhaber: Scharmüller, Josef, 4892 Fornach (AT)
(72) Erfinder: Scharmüller, Josef, 4892 Fornach (AT)
(74) Vertreter: Gibler & Poth Patentanwälte OG

(56) Entgegenhaltungen:
- EP-A- 1 048 550
- EP-A- 1 559 592
- DE-A1- 3 919 561
- DE-U1-202004 001 249
- FR-A- 2 753 161
- FR-A- 2 828 532

## Beschreibung

Die Erfindung betrifft ein Zwangslenkungssystem gemäß dem Oberbegriff des Patentanspruches 1.

Das Zugfahrzeug ist dabei das motorisierte Fahrzeug und der Anhänger das nicht motorisierte Fahrzeug des als Fahrzeugkombination ausgebildeten Gespanns.

Um große nicht motorisierte Fahrzeuge, insbesondere Anhänger, mit einem Zugfahrzeug, insbesondere einem Traktor, spurtreu nachzuführen und die Manövrierfähigkeit einer aus dem Fahrzeug und dem Zugfahrzeug bestehenden Fahrzeugkombination zu verbessern werden Zwangslenkungssysteme verwendet.

Die DE 39 19 561 A1 zeigt eine Zwangslenkung zur Verwendung mit mindestens einem Anhänger und mehreren unterschiedlichen Zugfabrzeugen.

Die EP 1 559 592 A zeigt ein mehrteiliges Kupplungsteil für eine Zwangslenkung.

Auch die EP 1 048 550 A und die DE 20 2004 001249 U1 beschreiben Zwangslenkungen Eine Zwangslenkung, welche einen Kupplungspunkt und an einen Anlenkpunkt aufweist, ist weiters in der FR 2 828 532 A beschrieben.

Die FR 2 753 161 A wiederum beschreibt eine Zwangslenkung umfassend einen Geberzylinder.

Die Zwangslenkungssysteme finden bei Fahrzeugen mit mehreren Hinterradachsen Anwendung und dienen zum Zwangslenken zumindest einer gelenkten Hinterradachse. Diese Zwangslenkungssysteme haben die Aufgabe, eine der Hinterradachsen des Anhängers in Abhängigkeit der Stellung von Zugfahrzeug zum Anhänger auszulenken. Dadurch ergibt sich der Vorteil, dass bei einer Kurvenfahrt von Zugfahrzeug und Anhänger hintereinander liegende Räder der mehreren Hinterradachsen, insbesondere sämtlicher Achsen, des Anhängers zumindest im Wesentlichen in einer Spur rollen.

Nachteilig daran ist, dass beim Wechsel des Anhängers auf ein unterschiedliches Zugfahrzeug - beispielsweise wenn das Standardzugfahrzeug serviciert, repariert, umgebaut und/oder ersetzt wird - das Zwangslenkungssystem nicht mehr aufgabengemäß funktioniert und die hintereinander liegenden Räder der mehreren Hinterradachsen, insbesondere sämtlicher Achsen, des Anhängers bei der Kurvenfahrt nicht spurtreu rollen.

Aufgabe der Erfindung ist es daher ein Zwangslenkungssystem der eingangs genannten Art anzugeben, mit welchem die genannten Nachteile vermieden werden können und welches an mehreren unterschiedlichen Zugfahrzeugen gewährleisten kann, dass die hintereinander liegenden Räder der mehreren Hinterradachsen des Anhängers bei der Kurvenfahrt spurtreu rollen.

Erfindungsgemäß wird dies durch die Merkmale des Patentanspruches 1 erreicht.

Dabei ergibt sich der Vorteil, dass unterschiedliche Kupplungsteile für die mehreren unterschiedlichen Zugfahrzeuge verwendet werden können. Aus diesen mehreren Kupplungsteilen kann für jedes der mehreren unterschiedlichen Zugfahrzeuge ein Kupplungsteil vorbestimmt zugeordnet werden.

Vorteilhaft dabei ist, dass zu jedem Anhänger und zu jedem Zugfahrzeug die passenden Kupplungsteile vorbestimmbar zuordenbar sind. Vorteilhaft dabei ist, dass nach der Auswahl des passenden Kupplungsteiles der Kupplungsvorgang wie herkömmlich durchgeführt werden kann und somit ohne oder mit lediglich geringem Mehraufwand gewährleistet ist, dass die hintereinander liegenden Räder der mehreren Hinterradachsen des Anhängers bei der Kurvenfahrt in einer Spur rollen.

Die Erfindung betrifft auch ein Verfahren zum Ankuppeln eines Zwangslenkungssystems gemäß dem Oberbegriff des Patentanspruches 9.

Aufgabe der Erfindung ist es daher ein derartiges Verfahren anzugeben, mit welchem die eingangs genannten Nachteile vermieden werden können und welches an mehreren unterschiedlichen Zugfahrzeugen gewährleisten kann, dass die hintereinander liegenden Räder der mehreren Hinterradachsen des Anhängers bei der Kurvenfahrt spurtreu zumindest im Wesentlichen in einer Spur rollen.

Erfindungsgemäß wird dies mit den Merkmalen des Patentanspruches 10 gewährleistet. Dadurch ergeben sich die oben stehenden Vorteile und vorteilhaften Wirkungen.

Die Unteransprüche, welche ebenso wie die Patentansprüche 1 und 10 gleichzeitig einen Teil der Beschreibung bilden, betreffen weitere vorteilhafte Ausgestaltungen der Erfindung.

In vorteilhafter Weiterbildung können die Merkmale des Patentanspruches 2 vorgesehen sein. Dadurch kann ein Einschlag des Zugfahrzeuges über einen vorbestimmten Winkel zwischen Zugfahrzeug und Deichsel verhindert werden. Vorteilhaft dabei ist, dass dadurch der maximale Winkel zwischen Zugfahrzeug und Deichsel vorbestimmt werden kann, wobei die Maximalauslenkung des Zwangslenkungssystems vorbestimmt werden kann und somit gewährleistet sein kann, dass das Zwangslenkungssystem nicht über einen maximal zulässigen Grenzwinkel hinaus ausgelenkt wird.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 das Zugfahrzeug und den Anhänger sowie das Zwangslenkungssystem einer ersten bevorzugten Ausführungsform in einer ersten Relativstellung, welche im Wesentlichen einer geradlinigen Fahrt entspricht, schematisch in Aufsicht;
Fig. 2 das Zugfahrzeug und den Anhänger der Fig. 1 in einer zweiten Relativstellung, welche einer Kurvenfahrt entspricht, schematisch in Aufsicht;
Fig. 3 den Kupplungsteil und den ersten Hydraulikzylinder einer ersten bevorzugten Ausführungsform schematisch in axonometrischer Darstellung;
Fig. 4 den Kupplungsteil und einen Hydraulikkreislauf des Zwangslenkungssystems einer zweiten bevorzugten Ausführungsform, umfassend den ersten Hydraulikzylinder, den zweiten Hydraulikzylinder, eine Steuereinheit, eine Handpumpe, zwei erste Druckausgleichsvorrichtungen sowie zwei zweite Druckausgleichsvorrichtungen schematisch in einer axonometrischen Darstellung;
Fig. 5 den Teil des Hydraulikkreislaufs im Bereich des zweiten Hydraulikzylinders des Zwangslenkungssystems einer dritten bevorzugten Ausführungsform, wobei anstatt einer Spurachse zwei zweite Hydraulikzylinder vorgesehen sind; und
Fig. 6 einen Teil des Zugösenteils einer bevorzugten Ausführungsform umfassend eine Zugöse, eine Deichsel und eine Lenkstange, wobei die Lenkstange einen ersten Hydraulikzylinder umfasst, sowie zwei Abstandhalter, welche ein Set an Abstandhaltern einer bevorzugten Ausbildungsform bilden, wobei die Abstandhalter am Zugösenteil, insbesondere an der Deichsel, angeordnet sind, und einen Teil des Kupplungsteils umfassend eine erste Kupplungskugel und eine zweite Kupplungskugel in einer axonometrischen Darstellung.

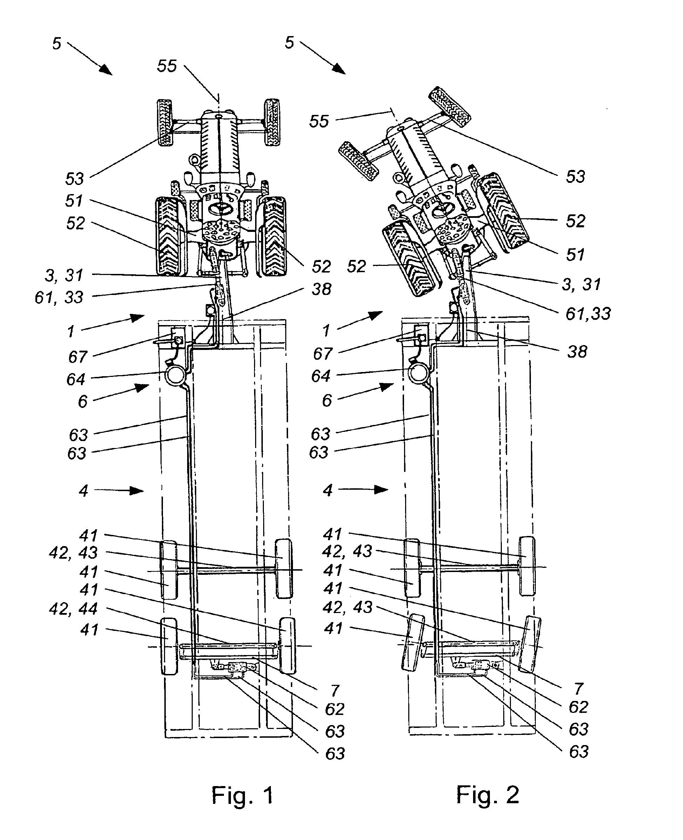

Die Fig. 1 bis 6 zeigen zumindest Teile eines Zwangslenkungssystems 1 zur Verwendung mit mindestens einem Anhänger 4 und mehreren unterschiedlichen Zugfahrzeugen 5, mit wenigstens einem Kupplungsteil 2 zur Anordnung an einem Zugfahrzeug 5 und einem Zugösenteil 3 zur Anordnung an einem Anhänger 4, wobei das Kupplungsteil 2 und das Zugösenteil 3 an einem Kuppelpunkt 11 und an einem von dem Kuppelpunkt 11 beabstandeten Anlenkpunkt 12 miteinander koppelbar sind, bei welchem vorgeschlagen wird, dass an jedem der mehreren unterschiedlichen Zugfahrzeuge 5 mittels zumindest eines der wenigstens einen Kupplungsteile 2 der Kuppelpunkt 11 und der Anlenkpunkt 12 jeweils in einem vorgebbaren Abstand zur Hinterradachse 51 des Zugfahrzeuges 5 bereitgestellt sind. Die Fig. 1 und 2 zeigt schematisch das Zugfahrzeug 5 und das als Anhänger 4 ausgebildete nicht motorisierte Fahrzeug, wobei Zugfahrzeug 5 und Anhänger 4 ein als Fahrzeugkombination ausgebildetes Gespanns ausbilden.

Das Zwangslenkungssystem 1 kann insbesondere in einem Verfahren zum Ankuppeln des Zwangslenkungssystems 1 verwendet werden, wobei das Zwangslenkungssystems 1 zum Zwangslenken mindestens eines Rades 41 des Anhängers 4, welcher abwechselnd von unterschiedlichen Zugfahrzeugen 5 gezogen werden kann, vorgesehen ist. Das Verfahren umfasst dabei die Schritte:
- dass zur Anordnung des Kuppelpunktes 11 und des Anlenkpunktes 12 in einem vorgebbaren Abstand zur Hinterradachse 51 des Zugfahrzeuges 5 in Abhängigkeit der des jeweiligen der unterschiedlichen Zugfahrzeuge 5 eines der vorbestimmbaren Kupplungsteile 2 an diesem Zugfahrzeug 5 angeordnet wird, und
- dass das Zugösenteil 3, welches vom Anhänger 4 umfasst ist, an dem jeweiligen Kupplungsteil 2 an dem Kuppelpunkt 11 und an dem vom Kuppelpunkt 11 beabstandeten Anlenkpunkt 12 miteinander gekoppelt wird.

Das Zwangslenkungssystem 1 und das Verfahren zum Ankuppeln, insbesondere des Zwangslenkungssystems 1, ermöglichen die eingangs genannten Vorteile und vorteilhaften Wirkungen. Insbesondere ermöglichen das Zwangslenkungssystem 1 und das Verfahren zum Zwangslenken das zumindest im Wesentlichen in einer Spur Rollen von hintereinander liegenden Rädern 41 mehrerer Hinterradachsen 42 auch bei unterschiedlichen Zugfahrzeugen 5.

Zwangslenkungssysteme 1 finden beim Ziehen von Fahrzeugen mit mehreren Hinterradachsen 42 Verwendung und dienen zum Zwangslenken zumindest einer gelenkten Hinterradachse 44, welche im Gegensatz zu einer ungelenkten Hinterradachse 43, lenkbar ausgebildet ist. Lenkbar bedeutet in diesem Zusammenhang, dass die Stellung der an der gelenkten Hinterradachse 44 montieren Räder 41 vorbestimmt unterschiedliche Lenkwinkel einnehmen kann, wobei das Lenken der Räder 41 auch als Einschlagen der Räder 41 bezeichnet werden kann.

Vorteilhaft bei dem Zwangslenkungssystem 1 ist, dass, wenn das Zwangslenkungssystem 1 des Anhängers 4 auf das Zugfahrzeug 5 abgestimmt ist, die hintereinander liegenden Räder 41 mehrerer Hinterradachsen 42, insbesondere sämtlicher Achsen, des Anhängers 4 nicht nur beim Geradeausfahren, welches schematisch in der Fig. 1 dargestellt ist, sondern auch beim Kurvenfahren, welches schematisch in der Fig. 2 dargestellt ist, in einer Spur rollen. Dies ist insbesondere beim Befahren eines Feldes, eines Ackers, eines Feldweges und/oder eines Forstweges vorteilhaft, da die hintereinander liegenden Räder 41 des Anhängers 4 auch beim Kurvenfahren lediglich im Wesentlichen eine Spur erzeugen. Da hiebei wenig Frucht des bestellten Feldes und/oder Ackers niedergefahren wird, kann die Frucht geschont werden. Ebenso wird hiebei wenig der Bodenfläche des Feldes und/oder Ackers verdichtet, womit die Zwanglenkung auch für den Boden von Vorteil ist. Schlussendlich können schmale und schwierig zu befahrene Feldwege und/oder Forstwege sicher und mit hoher Zuverlässigkeit befahren werden, da der Anhänger 4 dem Zugfahrzeug 5 aufgrund des Zwangslenkungssystems 1 mit hoher Spurgenauigkeit folgt.

Problematisch bei Zwangslenkungssystemen 1 gestaltet sich jedoch der Wechsel des Zugfahrzeuges 5. Da unterschiedliche Zugfahrzeuge 5 - aufgrund der unterschiedlichen Abstände von Vorderachse 53 und Hinterachse 51 des Zugfahrzeuges 5 und aufgrund der unterschiedlichen Spurbreiten, also der Radabstände auf einer Achse, unterschiedliche Einschlagscharakteristika aufweisen, so muss - für einen optimalen und ordnungsgemäßen Nachlauf des Anhängers 4 - das Zwangslenkungssystem 1 auf das jeweilige Zugfahrzeug 5 abgestimmt sein. Die Abstimmung umfasst dabei sowohl die Winkelabhängigkeit als auch die Geradestellung des Zwangslenkungssystems 1, wofür jede mögliche Fahrzeugkombination, also ein vorbestimmter Anhänger 4 und ein vorbestimmtes Zugfahrzeug 5, in der Winkelabhängigkeit und der Geradestellung des Zwangslenkungssystems 1 einzeln abzustimmen sind.

Die Geradeausstellung des Zwangslenkungssystems 1 wird normalerweise derart eingestellt, indem die Fahrzeugkombination, also der Anhänger 4 und das jeweilige Zugfahrzeug 5, auf einer ebenen Fläche ausgerichtet und sowohl Zugöse 35 als auch Lenköse 36 am Zugfahrzeug 5 angekuppelt wird. Hiezu werden Steuerventile einer Steuereinheit 64 geöffnet und das Zwangslenkungssystem 1 auf Nachlaufbetrieb gestellt. Nachlaufbetrieb des Zwangslenkungssystems 1 bedeutet, dass die - üblicherweise mittels eines Hydrauliksystems 6 bewirkte - Wirkverbindung kräfteübertragungsfrei geschaltet ist und somit die gelenkte Hinterachse 44 des Anhängers 4 anstatt zwangsgelenkt selbstlenkend, insbesondere nachlaufend, geschaltet ist. Bei einer Geradeausfahrt läuft auch die gelenkte Hinterachse 44 des Anhängers gerade nach. Nachdem das Zwangslenkungssystem 1 auf Zwangslenkung gestellt ist, also, nachdem die Wirkverbindung kräfteübertragend geschaltet ist, sind die Stellungen eines ersten Hydraulikzylinders 61 und eines zweiten Hydraulikzylinders 62 für die Fahrzeugkombination aufeinander abgestimmt.

Der erste Hydraulikzylinder 61 und/oder der zweite Hydraulikzylinder 62 können bevorzugt doppelwirkend ausgebildet sein.

Der erste Hydraulikzylinder 61 kann bevorzugt als Geberzylinder ausgebildet sein, wobei eine Stellungsänderung des ersten Hydraulikzylinders 61 in Bewegung der Hydraulikflüssigkeit gewandelt wird. Der zweite Hydraulikzylinder 62 kann bevorzugt als Nehmerzylinder ausgebildet sein, wobei die vom Geberzylinder angesteuerte Bewegung der Hydraulikflüssigkeit eine Stellungsänderung des Nehmerzylinders bewirkt.

Zum Befüllen und zum Einstellen des Betriebsdruckes der Hydraulikflüssigkeit im Zwangslenkungssystems 1, welcher bevorzugt zwischen 50bar und 100bar, also bevorzugt zwischen 5 MPa und 10 MPa, beträgt, kann vorteilhafterweise eine Handpumpe 67 vom Hydrauliksystem 6 umfasst sein.

Im Nachlaufbetrieb, also insbesondere im Vorwärts-Fahrbetrieb, des Zwangslenkungssystems 1 ist der optimale Nachlauf, also insbesondere der spurtreue Nachlauf, des Anhängers 4 dem Zugfahrzeug 5 üblicherweise nicht gegeben, weshalb im Normalbetrieb der Fahrzeugkombination ein sogenannter Zwangslenkungsbetrieb des Zwangslenkungssystems 1 vorzuziehen ist.

Vorteilhafterweise kann vom Hydrauliksystem 6 ein Kugelhahn zur Umstellung zwischen Nachlaufbetrieb und Zwangslenkungsbetrieb des Zwangslenkungssystems 1 umfasst sein. Dadurch kann der Betriebszustand des Zwangslenkungssystems 1 besonders einfach von Zwangslenkungsbetrieb auf Nachlaufbetrieb - und umgekehrt - umgestellt werden. Vorteilhaft dabei ist, dass in jeder Stellung bzw. in jeder Fahrsituation der Fahrzeugkombination der Betriebszustand des Zwangslenkungssystems 1 von Zwangslenkungsbetrieb auf Nachlaufbetrieb umgestellt werden kann, wobei die Lenkung des Zugfahrzeuges 5 entlastet werden kann. Vorteilhaft dabei ist ebenso, dass - wenn das Zugfahrzeug keinen Anlenkpunkt 12 bereitstellt - der Betriebszustand des Zwangslenkungssystems 1 von Zwangslenkungsbetrieb auf Nachlaufbetrieb einfach umgestellt werden kann. Dadurch kann bei Ausfall des Zugfahrzeuges 5 der Anhänger 4 durch ein als Abschleppfahrzeug ausgebildetes Zugfahrzeuges 5 abgeschleppt werden, wobei vorteilhafterweise auch Abschleppfahrzeuge mit anlenkpunktfreien Kupplungen verwendet werden können.

Die Abstimmung der Winkelabhängigkeit, also des Winkelverhältnisses vom Winkel zwischen Zugfahrzeug 5 und Zugösenteil 3 zum Lenkwinkel der gelenkten Räder 41 des Anhängers 4, des Zwangslenkungssystems 1 zur Fahrzeugkombination bereitet indes größere Schwierigkeiten und ist bei herkömmlichen Anhängerkupplungen oftmals nicht möglich, da aufgrund des nicht veränderbaren Winkelverhältnisses das Nachlaufverhalten des Anhängers bei herkömmlichen Zwangslenkungssystemen 1 oftmals nicht veränderbar ist.

Dadurch schlagen die gelenkten Räder 41 an der gelenkten Hinterachse 44, bei einer nicht abgestimmten Fahrzeugkombination in einem nicht optimalen Winkel ein. Dies führt oftmals dazu, dass der Anhänger 4 bei einer Kurvenfahrt nicht optimal spurtreu nachläuft. Dies kann die Manövrierfähigkeit der Fahrzeugkombination beschränken und kann zusätzlich auf einem Feld und/oder einem Acker das Niederfahren zusätzlicher Frucht und/oder das Verdichten zusätzlicher Bodenfläche bewirken. Dabei kann das Zwangslenkungssystem 1 ebenso über einen Maximalwinkel ausgelenkt werden, wobei das Zwangslenkungssystem 1 dauerhaft beschädigt werden kann. Alles dies kann so weit führen, dass manche Fahrzeugkombinationen folglich nicht im Zwangslenkungsbetrieb des Zwangslenkungssystems 1 gefahren werden können.

Um diese Nachteile zu vermeiden, ist bei den bevorzugten Ausführungsformen des Zwangslenkungssystems 1 vorgesehen, dass an jedem der mehreren unterschiedlichen Zugfahrzeuge 5 mittels zumindest eines der wenigstens einen Kupplungsteile 2 der Kuppelpunkt 11 und der Anlenkpunkt 12 jeweils in einem vorgebbaren Abstand zur Hinterradachse 51 des Zugfahrzeuges 5 bereitgestellt sind. Damit kann die Abstimmung der optimalen Winkelabhängigkeit, also des optimalen Winkelverhältnisses des Winkels zwischen Zugfahrzeug 5 und Zugösenteil 3 zum Lenkwinkel der gelenkten Räder 41 des Anhängers 4, für viele unterschiedliche Fahrzeugkombinationen vorbestimmt gewährleistet sein. Vorteilhaft dabei ist, dass die Abstimmung des Übertragungsverhaltens - welches sich aus sämtlichen geometrischen und bestimmbaren Zusammenhängen ergibt - rechnerisch und/oder rechnergestützt erfolgen kann.

Dadurch können zu jedem Anhänger 4 für die verschiedenen unterschiedlichen, insbesondere marktüblichen, Zugfahrzeuge 5 unterschiedliche Kupplungsteile 2 vorbestimmt und/oder dem Anhänger 4 beigegeben werden.

Ebenso können dadurch zu jedem Zugfahrzeug 5 für die verschiedenen unterschiedlichen, insbesondere marktüblichen, Anhänger 4 unterschiedliche Kupplungsteile 2 vorbestimmt und/oder dem Zugfahrzeug 5 beigegeben werden.

Beim Wechseln des Zugfahrzeuges 5 bei gleichem Anhänger 4 ist dann lediglich ein auf dieses Zugfahrzeug 5 angepasstes Kupplungsteil 2 auf dem Zugfahrzeug 5 zu montieren und gegebenenfalls der Geradeauslauf des Zwangslenkungssystems 1 gemäß den obigen Angaben einzustellen, womit der zusätzliche Aufwand beim Anhängen des Anhängers 4 gering ist und womit die hohe Spurtreue und die hohe Manövrierfähigkeit des Anhängers 4 gewährleistet ist. Durch die geeignete Wahl des Kupplungsteiles 2 kann insbesondere beim Wechsel des Zugfahrzeuges 5 von einem ersten Zugfahrzeug 5 auf ein unterschiedliches zweites Zugfahrzeug 5 der Kuppelpunkt 11 und der Anlenkpunkt 12 beim zweiten Zugfahrzeug 5 derart bereitgestellt werden, dass kein weiteres Einrichten des Zwangslenkungssystems 1 in Hinblick auf den Geradeauslauf und den Lenkeinschlag der gelenkten Räder 41 notwendig ist. Dabei ist der zusätzliche Aufwand beim Anhängen des Anhängers 4 besonders gering, wobei die Abstimmung des Nachlaufverhaltens des Anhängers 4 im Wesentlichen durch die Wahl des dieser Fahrzeugkombination, also der Kombination des Anhängers 4 und des zweiten Zugfahrzeuges 5, zugeordneten Kupplungsteiles 2 erfolgt.

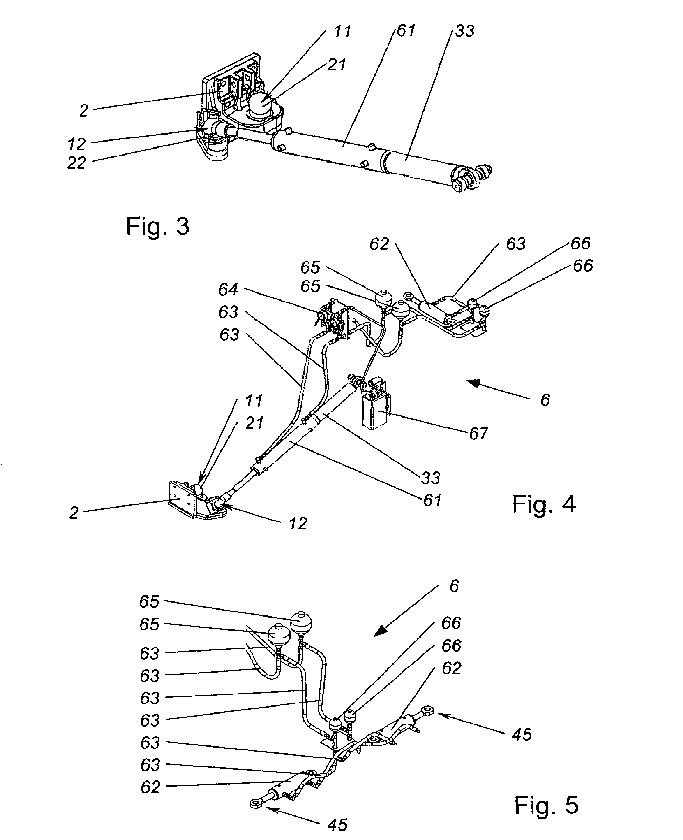

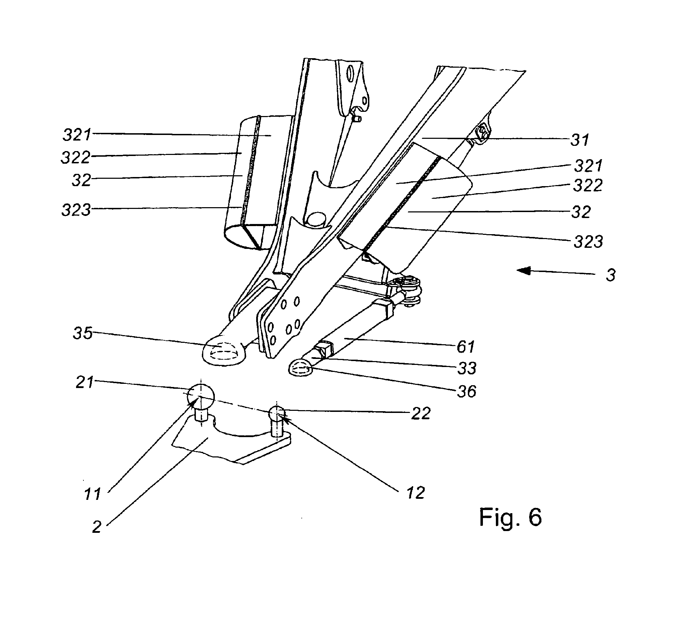

Schematisch ist die Kuppelung des ersten Hydraulikzylinders 61 an das Kupplungsteil 2 insbesondere in der Fig. 3 dargestellt, in welcher im Wesentlichen lediglich der erste Hydraulikzylinder 61 und das Kupplungsteil 2 dargestellt sind. Gezeigt sind in der Fig. 3 weiter der Kuppelpunkt 11, der Anlenkpunkt 12, die erste Kupplungskugel 21, die zweite Kupplungskugel 22 und die Lenkstange 33, welche den ersten Hydraulikzylinder 61 umfasst. Das Zugösenteil 3 ist schematisch insbesondere in der Fig. 6 dargestellt. Das Zugösenteil 3 kann dabei insbesondere im Wesentlichen als Deichsel 31 ausgebildet sein und eine Lenkstange 33 umfassen. Das Zugösenteil 3 umfasst eine Zugöse 35 zum Übertragen der Zugkräfte vom Kupplungsteil 2, insbesondere vom Kuppelpunkt 11, auf den Anhänger 4 und die Lenkstange 33 eine Lenköse 36 zum Übertragen der Lenkkräfte vom Kupplungsteil 2, insbesondere vom Anlenkpunkt 12, auf das Zwangslenkungssystem 1.

Vorteilhafterweise können mehrere Fahrzeugkombinationen, also mehrere Kombinationen unterschiedlicher Zugfahrzeuge 5 und/oder unterschiedlicher Anhänger 4, welche eine ähnliches Nachlaufverhalten des Anhängers 5 aufweisen zu Kupplungsteilklassen zusammengefasst werden, wobei die Anzahl möglicher Kupplungsteilklassen vorbestimmt sein kann. Dadurch kann die Anzahl der zu verwendenden unterschiedlichen Kupplungsteile 2 minimiert werden, womit der Aufwand zur Herstellung und insbesondere zur Lagerung der Kupplungsteile 2 beim Benutzer gering sein kann.

Vorteilhafterweise kann vorgesehen sein, dass jedem der mehreren unterschiedlichen Zugfahrzeuge 5 jeweils ein Set an Abstandhaltern 32 zur Befestigung an dem Anhänger 4, vorzugsweise an der Deichsel 31 und/oder an dem Zugösenteil 3, zugeordnet ist, wobei der Abstandhalter 32 zum Kontaktieren der Bereifung 52 des Zugfahrzeuges 5 bei dem vorgebbaren Winkel zwischen dem Zugfahrzeug 5 und dem Anhänger 4 vorgesehen ist. Dadurch kann eine Auslenkung des Zwangslenkungssystems 1 über einen Maximalwinkel hinaus derart verhindert werden, dass ein Knickwinkel von Zugfahrzeug 5 zu Anhänger 4, insbesondere zum Zugösenteil 3, bevorzugt zur Deichsel 31, beschränkt werden kann. Der Knickwinkel, welcher dem Winkel zwischen dem Zugfahrzeug 5 und dem Anhänger 4 entspricht und welcher zwischen der Längsmittelachse 55 des Zugfahrzeuges 5 und der durch die Zugöse 35 gehende Längsmittelachse 38 des Zugösenteils 3 gemessen wird, ist bei der Geradeausfahrt, welche in Fig. 1 dargestellt ist, der Fahrzeugkombination 0° und kann beim Einlenken des Zugfahrzeuges 5, welches in der Fig. 2 dargestellt ist, bis zu 90° betragen. Vorteilhafterweise kann der maximale Knickwinkel mittels dem Set an Abstandhaltern 32 sowohl beim Linkslenken als auch beim Rechtslenken des Zugfahrzeuges 5 auf 45° bis 60° beschränkt sein, wobei diese Art der Beschränkung des Knickwinkels in Fig. 6 dargestellt ist. Vorteilhaft dabei ist, dass der maximale Knickwinkel dem vorgebbaren Winkel zwischen dem Zugfahrzeug 5 und dem Anhänger 4, bei welchem die Bereifung 52 der Hinterachse 51 des Zugfahrzeuges 5 den Abstandhalter 32 kontaktiert, entspricht. Vorteilhafterweise wird beim Kontakt Lärm erzeugt und auf den maximalen Knickwinkel hinweisen, wobei das Zugösenteil 3, die Deichsel 31 und/oder die Bereifung 52 des Zugfahrzeuges 5 nicht beschädigt wird. Dazu kann der Abstandhalter 32 mehrteilig ausgebildet sein und einen Abstandhalterunterteil 321 und einen Abstandhalteroberteil 322 umfassen. Dadurch kann der Abstandhalterunterteil 321 zur Anpassung der maximalen Erstreckung des Abstandhalters 32 von dem Zugösenteil 3, insbesondere der Deichsel 31, und der Abstandhalteroberteil 322 zur Lärmerzeugung ausgebildet sein.

Dabei kann der Abstandhalterunterteil 321 im Wesentlichen quaderförmig und insbesondere im Wesentlichen aus einem Blech ausgebildet sein.

Dabei kann der Abstandhalteroberteil 322 im Wesentlichen, halbrund, gebogen oder als Steg und insbesondere im Wesentlichen aus Kunststoff, insbesondere einem Elastomer und/oder einem Thermoplast, ausgebildet sein.

Dabei kann das Abstandhalteroberteil 322 lösbar mit einer Befestigungsvorrichtung am Abstandhalterunterteil 321 verbunden sein. Dadurch können unterschiedliche Abstandhalterunterteile 321 und unterschiedliche Abstandhalteroberteile 322 miteinander verbunden werden, womit aus einigen wenigen unterschiedlichen Abstandhalterunterteilen 321 und einigen wenigen unterschiedlichen Abstandhalteroberteilen 322 viele Abstandhalter 32 unterschiedlicher Geometrie und unterschiedlicher Lärmerzeugung beim Berühren von Bereifung 52 und Abstandhalter 32 ausgebildet sein können.

Bevorzugt kann vorgesehen sein, dass der wenigstens eine Kupplungsteil 2 an dem Kuppelpunkt 11 eine erste Kupplungskugel 21 und an dem Anlenkpunkt 12 eine zweite Kupplungskugel 22 aufweist, wobei - beim Kuppeln des Anhängers 4 am Zugfahrzeug 5 - der wenigstens eine Kupplungsteil 2 an dem Kuppelpunkt 11 mit einer ersten Kupplungskugel 21 und an dem Anlenkpunkt 12 mit einer zweiten Kupplungskugel 21 wirkverbunden werden kann. Dadurch kann das Kuppeln des Anhängers 4 am Zugfahrzeug 5 einfach und die Zugkraftübertragung sowie die Lenkkraftübertragung zuverlässig erfolgen.

Die Zugöse 35 und die Lenköse 36 können - wie in der Fig. 6 dargestellt - halbkugelschalenförmig als nicht durchbrochene Zugösenschale und Lenkösenschale zum Aufkuppeln auf eine erste Kupplungskugel 21 und/oder eine zweite Kupplungskugel 22 ausgebildet sein.

In vorteilhafter Weiterbildung kann vorgesehen sein, dass das Zugösenteil 3 eine an dem Anlenkpunkt 12 koppelbare Lenkstange 33 aufweist und dass die Lenkstange 33 einen ersten Hydraulikzylinder 61 umfasst. Dadurch kann das Zugösenteil 3 mit einer Lenkstange 33 an den Anlenkpunkt 12 gekoppelt und ein erster Hydraulikzylinder 61 mittels der Lenkstange 33 mit dem Anlenkpunkt 12 wirkverbunden werden. Vorteilhaft dabei ist, dass herkömmliche Zwangslenkungssysteme auch mit dem Kupplungsteil 2, insbesondere mit unterschiedlichen der Kupplungsteile 2, verwendet werden können, womit die ordnungsgemäße Funktion des anhängerseitigen Teils des Zwangslenkungssystems 1 auch ohne eine Änderung, insbesondere ein Umbau, gewährleistet werden kann.

Vorteilhafterweise kann vorgesehen sein, dass zumindest ein unmittelbar die Auslenkung wenigstens eines Rades 41 des Anhängers 4 bewirkender zweiter Hydraulikzylinder 62 mittels eines Leitungssystems 63 mit dem ersten Hydraulikzylinder 61 wirkverbunden ist. In diesem Zusammenhang kann die Auslenkung zumindest eines unmittelbar die Auslenkung wenigstens eines Rades 41 des Anhängers 4 bewirkenden zweiten Hydraulikzylinders 62 mittels eines Leitungssystems 63 durch den ersten Hydraulikzylinder 61 zwangsgesteuert werden. Dies erfolgt vorteilhafterweise im Zwangslenkungsbetrieb des Zwangslenkungssystems 1, wobei der erste Hydraulikzylinder 61 mechanisch mit dem Anlenkpunkt 12, der erste Hydraulikzylinder 61 hydraulisch mit dem zweiten Hydraulikzylinder 62 und der zweite Hydraulikzylinder 62 mechanisch mit den gelenkten Rädern 41 der gelenkten Hinterachse 44 wirkverbunden ist.

Insbesondere kann vorgesehen sein, dass der zweite Hydraulikzylinder 62 an einer Spurstange 7 des Anhängers angreift, wobei mittels des zweiten Hydraulikzylinders 62 die Stellung einer Spurstange 7 des Anhängers 4 zwangsgesteuert werden kann. Dadurch kann lediglich ein zweiter Hydraulikzylinder 62 den Lenkwinkel beider gelenkter Räder 41 der gelenkten Hinterachse 44 steuern. Diese vorteilhafte Ausführungsform des Zwangslenkungssystems 1 ist in den Fig. 1, 2 und 4 dargestellt.

In einer dazu unterschiedlichen vorteilhaften Ausführungsform können anstatt des einen zweiten Hydraulikzylinders 62 und der Spurstange 7 des Anhängers 4 zwei zweite Hydraulikzylinder 62 ausgebildet sein, wie dies in der Fig. 5 dargestellt ist. Dabei sind radseitige Enden 45 der beiden zweiten Hydraulikzylinder 62 im Wesentlichen unmittelbar mit den gelenkten Rädern 41 wirkverbunden, womit auf die Ausbildung der Spurstange 7 verzichtet werden kann.

Besonders bevorzugt kann vorgesehen sein, dass das Leitungssystem 63 im Bereich des ersten Hydraulikzylinders 61 eine erste Druckausgleichsvorrichtung 65 und/oder im Bereich des zweiten Hydraulikzylinders 62 eine zweite Druckausgleichsvorrichtung 66 aufweist.

Dabei kann vorgesehen sein, dass Druckspitzen im Leitungssystem 63 im Bereich des ersten Hydraulikzylinders 61 mit einer ersten Druckausgleichsvorrichtung 65 und/oder im Bereich des zweiten Hydraulikzylinders 62 mit einer zweiten Druckausgleichsvorrichtung 66 ausgeglichen werden.

Vorteilhaft dabei ist, dass Schläge und/oder Überdrücke auf den ersten Hydraulikzylinder 61, welche beim Fahren, insbesondere beim Fahren auf unebenem Grund, auftreten können, an den zweiten Hydraulikzylinder 62 und/oder insbesondere abgeschwächt an das Leitungssystem 63 übertragen werden. Dadurch können Spannungsspitzen in mechanischen Teilen und/oder in der Hydraulikflüssigkeit des Leitungssystems 63, des zweiten Hydraulikzylinders 62 und/oder insbesondere der gelenkten Hinterachse 44, umfassend die gelenkten Räder 41 und gegebenenfalls die Spurstange 7, vermieden und/oder verringert werden. Vorteilhaft dabei ist, dass die hohe Lebensdauer und/oder die Geländegängigkeit des Zwangslenkungssystems 1 gewährleistet sein kann.

Die erste Druckausgleichsvorrichtung 65 und/oder die zweite Druckausgleichsvorrichtung 66 kann als 80bar-Druckspeicher und/oder als 50bar-Druckspeicher ausgebildet sein. Dabei kann der 80bar-Druckspeicher einen bei einem zu großen Knickwinkel, beispielsweise wenn der Anhänger 4 vom Zugfahrzeug 5 ohne Set an Abstandhaltern 32 gezogen wird und entsprechend stark einlenken kann, entstandenen Überdruck abfangen.

Dabei kann der 50bar-Druckspeicher kurze Spannungsspitzen abfangen, welche insbesondere bei Lenkbewegungen und/oder bei Bodenunebenheiten vom Anlenkpunkt 12 auf das Zwanglenkungssystem 1 übertragen werden.

In diesem Zusammenhang können die 80bar-Druckspeicher und/oder die 50bar-Druckspeicher als Stickstoffspeicher ausgebildet sein. Der Stickstoffspeicher kann als kleiner, insbesondere kugelförmiger, Behälter ausgebildet sein, in welchem eine Trennschicht zur räumlichen Trennung von unter Druck stehendem Stickstoff und der Hydraulikflüssigkeit ausgebildet ist. Der Druck des Stickstoffes kann dabei vorgebbar auf den Arbeitsdruck und/oder Arbeitpunkt des Stickstoffspeichers eingestellt werden. Dadurch kann die erste Druckausgleichsvorrichtung 65 und/oder die zweite Druckausgleichsvorrichtung 66 einfach, kostengünstig, bauraumschonend und/oder gewichtsparend ausgebildet sein.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Zwangslenkungssystem (1) zur Verwendung mit mindestens einem Anhänger (4) und mehreren unterschiedlichen Zugfahrzeugen (5), mit wenigstens einem Kupplungsteil (2) zur Anordnung an einem Zugfahrzeug (5) und einem Zugösenteil (3) zur Anordnung an einem Anhänger (4), wobei das Kupplungsteil (2) und das Zugösenteil (3) an einem Kuppelpunkt (11) und an einem von dem Kuppelpunkt (11) beabstandeten Anlenkpunkt (12) miteinander koppelbar sind, **dadurch gekennzeichnet, dass** an jedem der mehreren unterschiedlichen Zugfahrzeuge (5) mittels eines, diesem Zugfahrzeug (5) vorbestimmt zugeordneten Kupplungsteiles (2) der Kuppelpunkt (11) und der Anlenkpunkt (12) jeweils in einem vorgegebenen Abstand zu einer Hinterradachse (51) des Zugfahrzeuges (5) derart angeordnet sind, dass die Abstimmung des optimalen Winkelverhältnisses des Winkels zwischen dem Zugfahrzeug (5) und dem Zugösenteil (3) zum Lenkwinkel gelenkter Räder (41) des Anhängers (4) für unterschiedliche Fahrzeugkombinationen gewährleistbar ist.

2. Zwangslenkungssystem nach Anspruch 1, **dadurch gekennzeichnet, dass** jedem der mehreren unterschiedlichen Zugfahrzeugen (5) jeweils ein Set an Abstandhaltern (32) zur Befestigung an dem Anhänger (4), vorzugsweise an der Deichsel (31) und/oder an dem Zugösenteil (3), zugeordnet ist, wobei der Abstandhalter (32) zum Kontaktieren der Bereifung (52) des Zugfahrzeuges (5) bei einem vorgebbaren Winkel zwischen dem Zugfahrzeug (5) und dem Anhänger (4) vorgesehen ist.

3. Zwangslenkungssystem nach Anspruch 1 oder 2, **dadurch gekennzeichnet, dass** der wenigstens eine Kupplungsteil (2) an dem Kuppelpunkt (11) eine erste Kupplungskugel (21) und an dem Anlenkpunkt (12) eine zweite Kupplungskugel (22) aufweist.

4. Zwangslenkungssystem nach Anspruch 1, 2 oder 3, **dadurch gekennzeichnet, dass** das Zugösenteil (3) eine an dem Anlenkpunkt (12) koppelbare Lenkstange (33) aufweist und dass die Lenkstange (33) einen ersten Hydraulikzylinder (61) umfasst.

5. Zwangslenkungssystem nach Anspruch 4, **dadurch gekennzeichnet, dass** zumindest ein unmittelbar die Auslenkung wenigstens eines Rades (41) des Anhängers (4) bewirkender zweiter Hydraulikzylinder (62) mittels eines Leitungssystems (63) mit dem ersten Hydraulikzylinder (61) wirkverbunden ist.

6. Zwangslenkungssystem nach Anspruch 5, **dadurch gekennzeichnet, dass** das Leitungssystem (63) im Bereich des ersten Hydraulikzylinders (61) eine erste Druckausgleichsvorrichtung (65) und/oder im Bereich des zweiten Hydraulikzylinders (62) eine zweite Druckausgleichsvorrichtung (66) aufweist.

7. Zwangslenkungssystem nach einem der Ansprüche 1 bis 6, **dadurch gekennzeichnet, dass** das Zugösenteil (3) eine Zugöse (35), eine Deichsel (31) und eine Lenkstange (33) umfasst.

8. Zwangslenkungssystem nach einem der Ansprüche 1 bis 7, **dadurch gekennzeichnet, dass** das Zwangslenkungssystem (1) mehrere unterschiedliche Kupplungsteile (2) umfasst.

9. Verfahren zum Ankuppeln eines Zwangslenkungssystems (1) zum Zwangslenken mindestens eines Rades (41) eines Anhängers (4), welcher abwechselnd von unterschiedlichen Zugfahrzeugen (5) gezogen wird, **gekennzeichnet durch** die Schritte:
- dass zur Anordnung eines Kuppelpunktes (11) und eines Anlenkpunktes (12) in einem vorgegebenen Abstand zu einer Hinterradachse (51) in Abhängigkeit des jeweiligen Zugfahrzeuges (5) der unterschiedlichen Zugfahrzeuge (5) ein, diesem Zugfahrzeug (5) vorbestimmt zugeordnetes Kupplungsteil (2) an diesem Zugfahrzeug (5) derart angeordnet wird, dass die Abstimmung des optimalen Winkelverhältnisses des Winkels zwischen dem Zugfahrzeug (5) und einem Zugösenteil (3) zum Lenkwinkel der gelenkten Räder (41) des Anhängers (4) für unterschiedliche Fahrzeugkombinationen gewährleistbar ist,
- und dass das Zugösenteil (3), welches vom Anhänger (4) umfasst ist, an dem Kupplungsteil (2) an einem Kuppelpunkt (11) und an einem von dem Kuppelpunkt (11) beabstandeten Anlenkpunkt (12) angekoppelt wird.

10. Verfahren nach Anspruch 9, **dadurch gekennzeichnet, dass** ein jeweils einem der mehreren unterschiedlichen Zugfahrzeuge (5) zugeordnetes Set an Abstandhaltern (32) an dem Anhänger (4), vorzugsweise an der Deichsel (31) und/oder an dem Zugösenteil (3), befestigt wird, wobei der Abstandhalter (32) von der Bereifung (52) des Zugfahrzeuges (5) bei einem vorgebbaren Winkel zwischen dem Zugfahrzeug (5) und dem Anhänger (4) kontaktiert wird.

11. Verfahren nach Anspruch 9 oder 10, **dadurch gekennzeichnet, dass** der wenigstens eine Kupplungsteil (2) an dem Kuppelpunkt (11) mit einer ersten Kupplungskugel (21) und an dem Anlenkpunkt (12) mit einer zweiten Kupplungskugel (21) wirkverbunden wird.

12. Verfahren nach Anspruch 9, 10 oder 11, **dadurch gekennzeichnet, dass** das Zugösenteil (3) mit einer Lenkstange (33) an den Anlenkpunkt (12) gekoppelt und ein erster Hydraulikzylinder (61) mittels der Lenkstange (33) mit dem Anlenkpunkt (12) wirkverbunden wird.

13. Verfahren nach Anspruch 12, **dadurch gekennzeichnet, dass** die Auslenkung zumindest eines unmittelbar die Auslenkung wenigstens eines Rades (41) des Anhängers (4) bewirkenden zweiten Hydraulikzylinders (62) mittels eines Leitungssystems (63) durch den ersten Hydraulikzylinder (61) zwangsgesteuert wird.

14. Verfahren nach Anspruch 13, **dadurch gekennzeichnet, dass** mittels des zweiten Hydraulikzylinders (62) die Stellung einer Spurstange (7) des Anhängers (4) zwangsgesteuert wird.

15. Verfahren nach Anspruch 13 oder 14, **dadurch gekennzeichnet, dass** Druckspitzen im Leitungssystem (63) im Bereich des ersten Hydraulikzylinders (61) mit einer ersten Druckausgleichsvorrichtung (65) und/oder im Bereich des zweiten Hydraulikzylinders (62) mit einer zweiten Druckausgleichsvorrichtung (66) ausgeglichen werden.

## Claims

1. A forced steering system (1) for use with at least one trailer (4) and several different tractor vehicles (5), comprising at least one hitch part (2) for arrangement on a tractor vehicle (5) and a drawbar eye part (3) for arrangement on a trailer (4), with the hitch part (2) and the drawbar eye part (3) being capable of being coupled with each other at a hitch point (11) and an articulation point (12) spaced from the hitch point (11), **characterized in that** on each of the different tractor vehicles (5) the hitch point (11) and the articulation point (12) are each arranged at a predetermined distance from a rear wheel axle (51) of the tractor vehicle (5) by means of a hitch part (2) associated with said tractor vehicle (5) in a predetermined manner in such a way that the adjustment of the optimal angular ratios of the angle between the tractor vehicle (5) and the drawbar eye part (3) to the steer angle of steered wheels (41) of the trailer (4) can be ensured for different combinations of vehicles.

2. A forced steering system according to claim 1, **characterized in that** one set each of distance pieces (32) for fastening to a trailer (4), preferably to the drawbar (31) and/or the drawbar eye part (3), is associated with each of the several different tractor vehicles (5), with the distance piece (32) being provided for making contact with the tires (52) of the tractor vehicle (5) at a predetermined angle between the tractor vehicle (5) and the trailer (4).

3. A forced steering system according to claim 1 or 2, **characterized in that** the at least one hitch part (2) comprises a first hitch ball (21) on the hitch point (11) and a second hitch ball (22) on the articulation point (12).

4. A forced steering system according to claim 1, 2 or 3, **characterized in that** the drawbar eye part (3) comprises a steering rod (33) that can be coupled with the articulation point (12) and the steering rod (33) comprises a first hydraulic cylinder.

5. A forced steering system according to claim 4, **characterized in that** at least one second hydraulic cylinder (62) which directly causes the deflection of at least one wheel (41) of the trailer (4) is operatively connected with the first hydraulic cylinder (61) by means of a line system (63).

6. A forced steering system according to claim 5, **characterized in that** the line system (63) comprises a first pressure-equalizing apparatus (65) in the region of the first hydraulic cylinder (61) and/or a second pressure-equalizing apparatus (66) in the region of the second hydraulic cylinder (62).

7. A forced steering system according to one of the claims 1 to 6, **characterized in that** the drawbar eye part (3) comprises a drawbar eye (35), a drawbar (31) and a steering rod (33).

8. A forced steering system according to one of the claims 1 to 7, **characterized in that** the forced steering system (1) comprises several different hitch parts (2).

9. A method for hitching a forced steering system (1) for the forced steering of at least one wheel (41) of a trailer (4) which is drawn alternatively by different tractor vehicles (5), **characterized by** the steps:
- that for arranging a hitch point (11) and an articulation point (12) at a predetermined distance from a rear wheel axle (51) depending on the respective tractor vehicle (5) of the different tractor vehicles (5) a hitch part (2) which is associated with said tractor vehicle (5) in a predetermined manner is arranged on said tractor vehicle (5) in such a way that the adjustment of the optimal angular ratios of the angle between the tractor vehicle (5) and a drawbar eye part (3) to the steer angle of steered wheels (41) of the trailer (4) can be ensured for different combinations of vehicles;
- and that the drawbar eye part (3) which is comprised by the trailer (4) is hitched on the hitch part (2) at a hitch point (11) and at an articulation point (12) spaced from the hitch point (11).

10. A method according to claim 9, **characterized in that** a set of distance pieces (32) which is each associated with one of the several tractor vehicles (5) is fastened to the trailer (4), preferably to the drawbar (31) and/or the drawbar eye part (3), with the distance piece (32) making contact with the tires (52) of the tractor vehicle (5) at a predetermined angle between the tractor vehicle (5) and the trailer (4).

11. A method according to claim 9 or 10, **characterized in that** the at least one hitch part (2) is operatively connected to the hitch point (11) with a first hitch ball (2) and to the articulation point (12) with a second hitch ball (21).

12. A method according to claim 9, 10 or 11, **characterized in that** the drawbar eye part (3) is coupled with a steering rod (33) to the articulation point (12) and a first hydraulic cylinder (61) is operatively connected by means of the steering rod (33) to the articulation point (12).

13. A method according to claim 12, **characterized in that** the deflection of at least one second hydraulic cylinder (62) which directly causes the deflection of at least one wheel (41) of the trailer (4) is forcibly controlled by the first hydraulic cylinder (61) by means of a line system (63).

14. A method according to claim 13, **characterized in that** the position of a tie rod (7) of the trailer (4) is forcibly controlled by means of the second hydraulic cylinder (62).

15. A method according to claim 13 or 14, **characterized in that** the pressure peaks in the line system (63) are compensated in the region of the first hydraulic cylinder (61) with a first pressure-equalizing apparatus (65) and/or in the region of the second hydraulic cylinder (62) with a second pressure-equalizing apparatus (66).

## Revendications

1. Système de guidage forcé (1) à utiliser avec au moins une remorque (4) et plusieurs véhicules tracteurs (5) différents, avec au moins une partie d'attelage (2) destinée à être disposée sur un véhicule tracteur (5) et une partie formant oeillet d'attelage (3) destinée à être disposée sur une remorque (4), dans lequel la partie d'attelage (2) et la partie formant oeillet d'attelage (3) peuvent être couplées ensemble en un point d'accouplement (11) et en un point d'articulation (12) distant du point d'accouplement (11), **caractérisé en ce que** sur chacun des multiples véhicules tracteurs (5) différents, le point d'accouplement (11) et le point d'articulation (12) sont disposés à une distance prédéterminée d'un essieu arrière (51) du véhicule tracteur (5), au moyen d'une partie d'attelage (2) associée de façon prédéterminée à ce véhicule tracteur, de telle manière que l'ajustement de la relation angulaire optimale de l'angle entre le véhicule tracteur (5) et la partie formant oeillet d'attelage (3) par rapport à l'angle de direction des roues dirigées (41) de la remorque (4) soit garanti pour différentes combinaisons de véhicule.

2. Système de guidage forcé selon la revendication 1, **caractérisé en ce que** chacun des multiples véhicules tracteurs (5) différents est associé à un ensemble d'éléments d'écartement (32) pour la fixation sur la remorque (4), de préférence sur le timon (31) et/ou sur la partie formant oeillet d'attelage (3), l'élément d'écartement (32) étant destiné à venir en contact avec le pneu (52) du véhicule tracteur (5) à un angle pouvant être prédéterminé entre le véhicule tracteur (5) et la remorque (4).

3. Système de guidage forcé selon la revendication 1 ou 2, **caractérisé en ce que** l'au moins une partie d'attelage (2) présente au point d'accouplement (11) une première boule d'attelage (21) et au point d'articulation (12) une deuxième boule d'attelage (22).

4. Système de guidage forcé selon la revendication 1, 2 ou 3, **caractérisé en ce que** la partie formant oeillet d'attelage (3) présente une tringle de direction (33) pouvant être couplée au point d'articulation (12) et **en ce que** la tringle de direction (33) comprend un premier vérin hydraulique (61).

5. Système de guidage forcé selon la revendication 4, **caractérisé en ce qu'**au moins un deuxième vérin hydraulique (62) réalisant directement la déviation d'au moins une roue (41) de la remorque (4) est mis en liaison active avec le premier vérin hydraulique (61) au moyen d'un système de conduites (63).

6. Système de guidage forcé selon la revendication 5, **caractérisé en ce que** le système de conduites (63) présente au niveau du premier vérin hydraulique (61) un premier dispositif d'équilibrage de la pression (65) et/ou au niveau du deuxième vérin hydraulique (62) un deuxième dispositif d'équilibrage de la pression (66).

7. Système de guidage forcé selon l'une des revendications 1 à 6, **caractérisé en ce que** la partie formant oeillet de traction (3) comprend un oeillet de traction (35), un timon (31) et une tringle de direction (33).

8. Système de guidage forcé selon l'une des revendications 1 à 7, **caractérisé en ce que** le système de guidage forcé (1) comprend plusieurs parties d'attelage (2) différentes.

9. Procédé pour le couplage d'un système de guidage forcé (1) pour la guidage forcé d'au moins une roue (41) d'une remorque qui est tractée alternativement par différents véhicules tracteurs (5), **caractérisé en ce qu'**il comporte les étapes suivantes :
- pour placer un point de couplage (11) et un point d'articulation (12) dans un état prédéterminé par rapport à un essieu arrière (51) en fonction du véhicule tracteur (5) concerné parmi les différents véhicules tracteurs (5), une partie de couplage (2) associée de façon prédéterminée à ce véhicule tracteur (5) est disposée sur ce véhicule tracteur (5), de telle manière que l'ajustement de la relation angulaire optimale de l'angle entre le véhicule tracteur (5) et la partie formant oeillet d'attelage (3) par rapport à l'angle de direction des roues (41) dirigées de la remorque (4) puisse être garanti pour différentes combinaisons de véhicules ;
- et la partie formant oeillet d'attelage (3) qui est saisie par la remorque (4) est accouplée au niveau de la partie de couplage (2) en un point d'accouplement (11) et en un point d'articulation (12) distant du point d'accouplement (11).

10. Procédé selon la revendication 9, **caractérisé en ce qu'**un ensemble d'éléments d'écartement (32) associé à l'un des multiples véhicules tracteurs (5) différents est fixé sur la remorque (4), de préférence sur le timon (31) et/ou sur la partie formant oeillet d'attelage (3), l'élément d'écartement (32) venant en contact avec le pneu (52) du véhicule tracteur (5) à un angle pouvant être prédéterminé entre le véhicule tracteur (5) et la remorque (4).

11. Procédé selon la revendication 9 ou 10, **caractérisé en ce que** l'au moins une partie d'attelage (2) est mise en relation active au point d'accouplement (11) avec une première boule d'attelage (21) et au point d'articulation (12) avec une deuxième boule d'attelage (21).

12. Procédé selon la revendication 9, 10 ou 11, **caractérisé en ce que** la partie formant oeillet d'attelage (3) est couplée par une tringle de direction (33) au point d'articulation (12) et un premier vérin hydraulique (61) est mis en liaison active avec le point d'articulation (12) au moyen de la tringle de direction (33).

13. Procédé selon la revendication 12, **caractérisé en ce que** la déviation d'au moins un deuxième vérin hydraulique (62) réalisant directement la déviation d'au moins une roue (41) de la remorque est commandée en force par le premier vérin hydraulique (61) au moyen d'un système de conduites (63).

14. Procédé selon la revendication 13, **caractérisé en ce que** la position d'une barre d'accouplement (7) de la remorque (4) est commandée en force au moyen du deuxième vérin hydraulique (62).

15. Procédé selon la revendication 13 ou 14, **caractérisé en ce que** les pics de pression dans le système de conduite (63) sont compensés au niveau du premier vérin hydraulique (61) avec le premier dispositif d'équilibrage de la pression (65) et/ou au niveau du deuxième vérin hydraulique (62) avec un deuxième dispositif d'équilibrage de la pression (66).
